## (19) Europäisches Patentamt
## European Patent Office
## Office européen des brevets

(11) **EP 1 051 353 B1**

(12) **FASCICULE DE BREVET EUROPEEN**

(45) Date de publication et mention
de la délivrance du brevet:
**04.06.2003 Bulletin 2003/23**

(21) Numéro de dépôt: **99906167.4**

(22) Date de dépôt: **21.01.1999**

(51) Int Cl.[7]: **C01D 7/00**, B01D 53/40,
C01D 7/42

(86) Numéro de dépôt international:
**PCT/EP99/00330**

(87) Numéro de publication internationale:
**WO 99/038800 (05.08.1999 Gazette 1999/31)**

(54) **PROCEDE D'EPURATION D'UN GAZ EN COMPOSES ACIDES**

VERFAHREN ZUR REINIGUNG EINES SAUREN GASES

METHOD FOR PURIFYING A GAS CONSISTING OF ACID COMPOUNDS

(84) Etats contractants désignés:
**AT BE CH CY DE DK ES FI FR GB GR IE IT LI LU
MC NL PT SE**

(30) Priorité: **29.01.1998 BE 9800060**

(43) Date de publication de la demande:
**15.11.2000 Bulletin 2000/46**

(73) Titulaire: **SOLVAY (Société Anonyme)
1050 Bruxelles (BE)**

(72) Inventeurs:
- **GHODSI, Mehdi
  B-1170 Bruxelles (BE)**
- **HAVELANGE, Nicolas
  B-1050 Bruxelles (BE)**
- **POELLAER, Stéphane
  B-1050 Bruxelles (BE)**
- **NINANE, Léon
  F-54110 Dombasle-sur-Meurthe (FR)**
- **DEMILIE, Paul
  B-7181 Arquennes (BE)**

(74) Mandataire: **Jacques, Philippe et al
Solvay S.A.
Département Propriété Industrielle
310, rue de Ransbeek
1120 Bruxelles (BE)**

(56) Documents cités:
DE-C- 431 256    US-A- 4 105 744

- **PATENT ABSTRACTS OF JAPAN vol. 095, no.
  001, 28 février 1995 & JP 06 296858 A (KURARAY
  CHEM CORP), 25 octobre 1994**
- **DATABASE WPI Section Ch, Week 8211 Derwent
  Publications Ltd., London, GB; Class J01, AN
  82-20397E XP002079275 & JP 56 152727 A
  (ALUMAX INC) , 26 novembre 1981**
- **B ELVERS ET AL (ED): "Ullmann's Encyclopedia
  of Industrial Chemistry, 5th Edn, Volume A24" ,
  SILICON COMPOUNDS, INORGANIC TO
  STAINS, MICROSCOPIC, NR. VOL. A24 , ELVERS
  B;HAWKINS S; RUSSEY W; SCHULZ G
  XP002079274 voir page 313: 1.7 Storage and
  Transport**
- **MOCEK K. ET AL.: 'On the morphological nature
  of Na2CO3 produced by thermal decomposition
  from NaHCO3 and from Na2CO3-10H2O'
  MATERIAL CHEMISTRY AND PHYSICS vol. 14,
  1986, pages 219 - 227**
- **LIDE D.R. ET AL.: 'Handbook of chemistry and
  physics', 1992, CRC PRESS, NEW YORK**
- **MOCEK K. ET AL.: 'The reactivity of different
  active forms of sodium carbonate with respect
  to sulfur dioxide' COLLECT. CZECH. CHEM.
  COMMUN. vol. 57, no. 11, 1992, pages 2302 - 2308**

**Description**

La présente invention est le résultat des travaux qui ont été effectués dans le laboratoire du Service de Chimie Industrielle et Analytique de la Faculté des Sciences Appliquées de l'Université Libre de Bruxelles.

L'invention concerne l'épuration des gaz en composés acides, au moyen d'un réactif basique, tels que les fumées provenant de la combustion de combustibles fossiles ou de l'incinération de déchets ménagers ou hospitaliers.

Le bicarbonate de sodium, à l'état de poudre, est connu comme réactif pour épurer des gaz en composés acides. Il trouve notamment une application pour épurer des fumées en oxydes de soufre, en oxydes d'azote (notamment en oxyde nitrique) et en halogénure d'hydrogène de formule générale HX (notamment en fluorure d'hydrogène et en chlorure d'hydrogène). De telles filmées sont communément générées par l'incinération d'ordures ménagères ou de déchets hospitaliers, ainsi que par la combustion de combustibles d'origine fossile, notamment dans les centrales thermiques de production d'électricité.

Dans ces applications, le gaz à épurer est mis en contact avec le bicarbonate de sodium à l'état d'une poudre finement broyée à une température généralement comprise entre 120 et 250 °C.

L'expérience a montré que le carbonate de sodium anhydre pouvait également convenir pour épurer un gaz en composés acides, à condition qu'il soit mis en oeuvre à l'état d'une poudre de grande surface spécifique. Dans une étude de K. MOCEK, E. LIPPERT et E. ERDÖS (Collection Czechoslovak Chemical Communications, vol. 57, n° 11, 1992, pages 2302-2308 : "The reactivity of différent active forms of sodium carbonate with respect to sulfur dioxide"), on cite l'emploi de carbonate de sodium présentant une surface spécifique de 11 $m^2$/g, obtenu par calcination de bicarbonate de sodium dans des conditions particulières [définies dans le brevet tchèque 171 524 (correspondant au brevet Etats-Unis 4 105 744)]. Dans cette étude de MOCEK et coll., du carbonate de sodium de surface spécifique égale ou inférieure à 1 $m^2$/g s'est révélé inactif. La soude légère du commerce (obtenue par calcination de bicarbonate de sodium) et la soude dense du commerce (obtenue par calcination de carbonate de sodium monohydraté) présentent généralement une surface spécifique de 1 à 2 $m^2$/g au maximum et se révèlent inactives pour l'épuration des gaz acides.

On a observé que la réactivité, vis-à-vis des gaz acides, du carbonate de sodium anhydre de grande surface spécifique diminue rapidement au cours du temps, ce qui constitue un inconvénient.

On a maintenant trouvé que l'on peut remédier à cet inconvénient avec des poudres de carbonate de sodium anhydre, soumises à un traitement de manutention particulier.

En conséquence, l'invention concerne un procédé pour l'épuration d'un gaz en composés acides, selon lequel on soumet le gaz à un traitement par voie sèche ou semi humide avec un réactif basique comprenant une poudre de carbonate de sodium de surface spécifique supérieure à 5 $m^2$/g, le procédé se caractérisant en ce qu'on met en oeuvre une poudre de carbonate de sodium anhydre qui, pendant sa manutention, est maintenue dans une atmosphère présentant une humidité relative de 0 à 7% et/ou contient de 2 à 15 parties en poids d'un agent dessicant pour 100 parties en poids de carbonate de sodium anhydre.

Dans le procédé selon l'invention, le réactif basique comprend une poudre de carbonate de sodium anhydre de grande surface spécifique, supérieure à 5 $m^2$/g. Par définition, la surface spécifique de la poudre de carbonate de sodium anhydre est obtenue par la méthode de mesure B.E.T. à adsorption d'azote. On utilise avantageusement une poudre de carbonate de sodium anhydre présentant une surface spécifique comprise entre 5 et 12 $m^2$/g, les surfaces spécifiques supérieures à 7 $m^2$/g étant préférées. Sont spécialement recommandées, les poudres de carbonate de sodium anhydre présentant une granulométrie définie par un diamètre moyen de particule de 95 à 115 µm et un étalement granulométrique tel que 95 % en poids de la poudre présente un diamètre de particule situé entre 60 et 150 µm. Dans cette application de l'invention, le diamètre moyen $D_m$ est défini par la relation

$$D_m = \frac{\sum n_i \cdot D_i}{\sum n_i}$$

dans laquelle $n_i$ désigne la fréquence (en poids) des particules de diamètre $D_i$, les diamètres $D_i$ étant mesurés par la méthode d'analyse granulométrique par diffraction de rayons laser.

En plus de la poudre de carbonate de sodium anhydre, le réactif basique peut éventuellement comporter du carbonate de sodium hydraté (par exemple du carbonate de sodium monohydraté) et/ou du bicarbonate de sodium. Le cas échéant, sa teneur pondérale en carbonate de sodium hydraté et/ou en bicarbonate de sodium est inférieure à 5 % (de préférence à 1 %) du poids de carbonate de sodium anhydre. Les particules de la poudre de carbonate de sodium anhydre peuvent éventuellement porter un enrobage en un matériau différent du carbonate de sodium. On préfère que le carbonate de sodium anhydre ne porte pas un tel enrobage, afin de ne pas nuire à sa réactivité vis-à-vis des gaz acides.

La poudre de carbonate de sodium anhydre peut être obtenue par tout moyen adéquat capable de lui conférer une surface spécifique supérieure à 5 $m^2$/g. Un moyen recommandé consiste à soumettre une poudre de bicarbonate de sodium à un chauffage dans une atmosphère présentant une humidité relative inférieure à 20 % (de préférence égale au maximum à 2 %), pour décomposer plus de 95 % (de préférence au moins 99 %) en poids du bicarbonate de sodium en carbonate de sodium anhydre.

Dans le procédé selon l'invention, le traitement du gaz avec le réactif basique peut être indifféremment un traitement par voie sèche ou un traitement par voie semi humide. On entend par traitement par voie sèche un traitement dans lequel le réactif basique est introduit à l'état d'une poudre solide dans le gaz, en l'absence d'un liquide, en particulier d'eau. En général, dans le traitement par voie sèche, le réactif basique est mis en oeuvre à l'état d'une poudre que l'on injecte dans un courant du gaz, circulant à l'intérieur d'une chambre de réaction ou d'une canalisation. On entend par traitement semi humide un traitement dans lequel le réactif basique est introduit dans le gaz en présence d'une quantité de liquide (habituellement de l'eau) telle que celui-ci soit totalement vaporisé au contact du gaz. Dans le traitement par voie semi humide, le réactif basique est généralement mis en oeuvre à l'état d'une poudre dispersée dans un liquide, généralement de l'eau. Selon l'invention, on préfère le traitement par voie sèche. Des informations concernant le traitement de la filmée avec le réactif basique sont accessibles dans le brevet européen EP-603 218 et la demande internationale WO 95/19835, tous les deux au nom de SOLVAY (Société Anonyme).

Dans le procédé selon l'invention, la poudre de carbonate de sodium anhydre contient un agent dessicant ou est maintenue dans une atmosphère présentant une humidité relative de 0 à 7%, pendant sa manutention. L'agent dessicant et ladite atmosphère ont pour fonction d'éviter un vieillissement de la poudre de carbonate de sodium anhydre, ce vieillissement se caractérisant par une diminution de la réactivité du carbonate de sodium à décomposer des gaz acides, en particulier les halogénures d'hydrogène (spécialement le chlorure d'hydrogène et le fluorure d'hydrogène), les oxydes de soufre (spécialement le dioxyde de soufre) et les oxydes d'azote (spécialement l'oxyde nitrique). En variante, la poudre de carbonate de sodium anhydre peut à la fois contenir un agent dessicant et être maintenue dans une atmosphère ayant une humidité relative de 0 à 7%, pendant sa manutention.

Dans le procédé selon l'invention, on entend, par manutention, à la fois la manipulation de la poudre de carbonate de sodium anhydre (transport, emballage, emmagasinage) et son stockage. La manutention est normalement considérée depuis le moment où la poudre de carbonate de sodium anhydre est fabriquée, jusqu'au moment où elle est mise en contact avec le gaz à épurer.

L'atmosphère mise en oeuvre pour la manutention du carbonate de sodium doit être inerte vis-à-vis du carbonate de sodium, avoir une température compatible avec la préservation des propriétés de la poudre de carbonate de sodium anhydre et présenter une humidité relative de 0 à 7%. Nonobstant ces trois conditions, le choix de l'atmosphère de manutention n'est pas critique. Elle peut par exemple être de l'air, de l'azote, de l'argon ou du dioxyde de carbone. L'air et le dioxyde de carbone conviennent bien.

Toutes autres choses étant égales, on préfère mettre en oeuvre une atmosphère de manutention dont la température est inférieure à 250 °C (de préférence inférieure à 100 °C, les températures de 10 à 25 °C étant spécialement recommandées). Pour ce qui concerne l'humidité relative de l'atmosphère, les valeurs de de 0 à 5 % (par exemple de 0,1 à 2 %) sont spécialement avantageuses. L'air sec est préféré.

Dans le cas des poudres de carbonate de sodium anhydre dont la surface spécifique est supérieure à 5 m$^2$/g (par exemple comprise entre 5 à 12 m$^2$/g), l'atmosphère de manutention présente de préférence une humidité relative de 0 à 5 % et une température de 10 à 25 °C.

Dans le procédé selon l'invention, l'atmosphère de manutention peut être calme.

Dans une forme de réalisation particulière du procédé selon l'invention, on soumet la poudre de carbonate de sodium anhydre à un balayage continu avec l'atmosphère de manutention. Dans cette forme de réalisation de l'invention, le balayage peut par exemple consister en une circulation de l'atmosphère au contact de la surface supérieure d'un lit de la poudre de carbonate de sodium anhydre. En variante, le balayage peut consister en une circulation ascendante de l'atmosphère à travers un lit de la poudre de carbonate de sodium anhydre. Dans cette variante de l'invention, le lit de carbonate de sodium anhydre peut être un lit fixe ou un lit fluidisé.

L'agent dessicant mis en oeuvre, le cas échéant, dans le procédé selon l'invention n'est pas critique. Les gels de silice et les hydroxydes des métaux alcalins sont spécialement recommandés. L'hydroxyde de sodium convient bien. La quantité optimum d'agent dessicant dépend de divers paramètres, notamment de l'agent dessicant sélectionné, de la surface spécifique et de la granulométrie de la poudre de carbonate de sodium anhydre et des conditions de manutention de celle-ci, notamment de la température de stockage, de l'humidité relative de l'atmosphère de stockage et de la durée de stockage avant son utilisation.

L'agent dessicant est généralement utilisé à l'état d'une poudre. A cet effet, il peut être mélangé mécaniquement à la poudre de carbonate de sodium anhydre. En variante, on mélange une poudre de l'agent dessicant à une poudre de bicarbonate de sodium et on soumet ensuite la poudre de bicarbonate de sodium, additionnée de l'agent dessicant à un chauffage, dans les conditions énoncées plus haut, pour former la poudre de carbonate de sodium anhydre.

Selon une autre forme de réalisation particulière de l'invention, pour obtenir la poudre de carbonate de sodium anhydre, on soumet une poudre de bicarbonate de sodium à un chauffage dans une atmosphère présentant une humidité relative inférieure à 20 % (de préférence égale au maximum à 2 %), pour décomposer plus de 95 % (de préférence au moins 99 %) du poids du bicarbonate de sodium en carbonate de sodium anhydre. Dans cette forme de réalisation de l'invention, la température du chauffage doit être suffisante pour décomposer sensiblement la totalité du bicarbonate de sodium en un temps acceptable. Elle est avantageusement supérieure à 50 °C. La température de chauffage doit être inférieure à 270 °C et il est préférable qu'elle n'excède pas 250 °C. Des températures de 60 à 150 °C conviennent bien, les températures de 100 à 120 °C étant préférées. Dans cette variante de l'invention, le chauffage doit être réalisé dans une atmosphère dont l'humidité relative est contrôlée de manière qu'elle soit en permanence inférieure à 20 %. En règle générale, on recommande que l'humidité relative de l'atmosphère dans laquelle on exécute le chauffage n'excède pas 5 %, de préférence 2 %, les valeurs de 0 à 2 % (par exemple de 0,1 à 2 %) étant spécialement avantageuses. Dans la forme de réalisation qui vient d'être décrite, le chauffage de la poudre de bicarbonate de sodium peut être réalisé par tout moyen adéquat. Selon l'invention, un moyen de chauffage spécialement avantageux consiste à fluidiser un lit de la poudre de bicarbonate de sodium au moyen d'un courant ascendant d'un gaz chaud. Dans cette variante de l'invention, le gaz chaud peut être de l'air ou un gaz inerte tel que de l'azote, de l'argon ou du dioxyde de carbone. On utilise de préférence un gaz anhydre.

Dans la forme de réalisation qui vient d'être décrite, l'origine de la poudre de bicarbonate de sodium n'est pas critique. Selon une variante avantageuse de cette forme de réalisation, la poudre de bicarbonate de sodium contient des sels d'ammonium et est obtenue par carbonatation d'une saumure ammoniacale dans une soudière à l'ammoniaque. Dans cette variante de l'invention, la poudre de bicarbonate de sodium contient généralement plus de 60% (généralement de 65 à 80 %) en poids de bicarbonate de sodium. Outre le bicarbonate de sodium, elle contient habituellement du carbonate de sodium anhydre, du chlorure de sodium, du carbonate d'ammonium et du chlorure d'ammonium (Te-Pang Hou, Manufacture of soda, Hafner Publishing Company, 1969, page 172). Dans la variante de réalisation qui vient d'être décrite, la poudre de bicarbonate de sodium se trouve avantageusement à l'état de particules de diamètre supérieur à 60 µm (habituellement compris entre 60 et 150 µm) tel que défini par la méthode d'analyse granulométrique par diffraction de rayons laser. Dans ce cas, le chauffage de la poudre de bicarbonate de sodium peut être réalisé avantageusement par fluidisation de la poudre de bicarbonate de sodium au moyen d'un courant ascendant de dioxyde de carbone chaud. Le gaz sortant du lit fluidisé peut alors être recyclé pour la carbonatation de la saumure ammoniacale dans une soudière à l'ammoniaque.

Le procédé selon l'invention s'applique spécialement bien à l'épuration de gaz en halogénures d'hydrogène de formule générale HX (où X désigne un ion halogénure, par exemple l'ion chlorure ou l'ion fluorure), en oxydes de soufre et en oxydes d'azote. Il trouve une application spécialement avantageuse pour l'épuration des fumées contaminées par du chlorure d'hydrogène dans les usines d'incinération de déchets ménagers ou de déchets hospitaliers. Il trouve également une application avantageuse pour l'épuration des fumées contaminées par du dioxyde de soufre et des oxydes d'azote, provenant de la combustion de combustibles fossiles dans les centrales thermiques de fabrication d'électricité.

Des particularités et détails de l'invention vont apparaître au cours de la description suivante d'une forme de réalisation particulière de l'invention.

Dans une soudière à l'ammoniaque, on a introduit du gaz ammoniac dans une solution aqueuse sensiblement saturée de chlorure de sodium, de manière à obtenir une saumure ammoniacale. On a ensuite fait réagir celle-ci avec un gaz contenant du dioxyde de carbone, dans un réacteur approprié, duquel on a recueilli un brouet de cristaux de bicarbonate de sodium. On a soumis le brouet à une filtration et on a recueilli de la filtration une poudre humide de bicarbonate de sodium.

Dans les essais dont la description suit, on a introduit une fraction de la poudre de bicarbonate de sodium dans un réacteur du type à lit fluidisé et on l'a fluidisée au moyen d'un courant ascendant de gaz chaud, pour la sécher et convertir la totalité du bicarbonate de sodium en carbonate de sodium anhydre. A l'issue de chaque essai, on a mesuré immédiatement la surface spécifique de la poudre de carbonate de sodium anhydre obtenue.

## Exemples 1 à 4

Dans ces exemples, le gaz utilisé pour fluidiser le lit de bicarbonate de sodium fut de l'air sec (teneur en humidité sensiblement nulle) à diverses températures. Le tableau 1 ci-dessous reproduit les conditions et les résultats des essais.

Tableau 1

| Exemple n° | Température du gaz à l'entrée du lit (°C) | Température du lit (°C) | Surface spécifique du carbonate de sodium anhydre (m$^2$/g) |
|---|---|---|---|
| 1 | 208 | 109 | 7,2 |

Tableau 1   (suite)

| Exemple n° | Température du gaz à l'entrée du lit (°C) | Température du lit (°C) | Surface spécifique du carbonate de sodium anhydre ($m^2$/g) |
|---|---|---|---|
| 2 | 159 | 102 | 8,4 |
| 3 | 150 | 94 | 9,6 |
| 4 | 129 | 87 | 10,1 |

## Exemple 5

Dans l'essai relatif à cet exemple, le gaz utilisé pour la fluidisation du lit de bicarbonate de sodium a été de l'air humide présentant une humidité relative de 2,7 %. Les caractéristiques de l'essai ont été les suivantes :

Température de l'air de fluidisation, à l'entrée du lit : 157 °C;
Température du lit pendant la fluidisation : 100 °C;
Surface spécifique du carbonate de sodium anhydre, recueilli du lit : 7,5 $m^2$/g.

## Exemples 6 à 8

On a recommencé les essais des exemples 1 à 4, en utilisant du dioxyde de carbone anhydre (teneur en humidité sensiblement nulle) pour le gaz de fluidisation du lit de bicarbonate de sodium. Les conditions et les résultats des essais sont reproduits dans le tableau 2 ci-dessous.

Tableau 2

| Exemple n° | Température du gaz à l'entrée du lit (°C) | Température du lit (°C) | Surface spécifique du carbonate de sodium anhydre ($m^2$/g) |
|---|---|---|---|
| 6 | 133 | 104 | 8,6 |
| 7 | 146 | 111 | 9,4 |
| 8 | 248 | 125 | 8,9 |

## Exemples 9 à 12

On a réalisé des essais semblables à ceux des exemples 1 à 4, en utilisant, pour fluidiser le lit, de l'air humide dont l'humidité relative est supérieure à 5 %. Les conditions et résultats des essais sont consignés dans le tableau 3 ci-dessous.

Tableau 3

| Exemple n° | Température du gaz à l'entrée du lit (°C) | Humidité relative du gaz (%) | Température du lit (°C) | Surface spécifique du carbonate de sodium anhydre ($m^2$/g) |
|---|---|---|---|---|
| 9 | 154 | 5,0 | 100 | 6,8 |
| 10 | 155 | 8,3 | 101 | 6,1 |
| 11 | 219 | 10,8 | 111 | 5,5 |
| 12 | 160 | 12,5 | 102 | 5,1 |

## Exemples 13 à 15

Dans ces exemples, le gaz utilisé pour la fluidisation a été du dioxyde de carbone humide. Les conditions et les résultats des essaie sont consignés au tableau 4 ci-dessous.

Tableau 4

| Exemple n° | Température du gaz à l'entrée du lit (°C) | Humidité relative du gaz (%) | Température du lit (°C) | Surface spécifique du carbonate de sodium anhydre (m$^2$/g) |
|---|---|---|---|---|
| 13 | 155 | 3,88 | 112 | 4,8 |
| 14 | 121 | 6,12 | 108 | 4,4 |
| 15 | 124 | 10,47 | 112 | 2,7 |

Les résultats des exemples 1 à 15 montrent que, toutes autres choses égales par ailleurs, la surface spécifique du carbonate de sodium anhydre est affectée défavorablement par la présence d'humidité pendant la conversion du bicarbonate de sodium en carbonate de sodium.

Exemples 16 à 19

Les quatre exemples dont la description suit concernent des essais de stockage de carbonate de sodium anhydre. Pour l'exécution de ces essais, on a traité une poudre de bicarbonate de sodium dans un réacteur du type à lit fluidisé, de la manière décrite plus haut, pour décomposer la totalité du bicarbonate de sodium et former du carbonate de sodium anhydre. Le gaz utilisé pour fluidiser le lit de bicarbonate de sodium fut, conformément à l'invention, du dioxyde de carbone sec (humidité relative sensiblement nulle). A l'issue du traitement, on a recueilli une poudre de carbonate de sodium anhydre et on a divisé celle-ci en quatre fractions que l'on a immédiatement enfermées dans quatre enceintes contenant chacune de l'air à degré d'humidité contrôlé. A l'issue d'une période de stockage d'une semaine les quatre enceintes ont été ouvertes et on a mesuré immédiatement la surface spécifique des échantillons de carbonate de sodium anhydre. Les résultats sont consignés dans le tableau 5.

Tableau 5

| Exemple n° (Echantillon n°) | Humidité relative de l'air dans l'enceinte (%) | Surface spécifique à l'issue du stockage (m$^2$/g) |
|---|---|---|
| 16 (1) | 37,10 | 3,3 |
| 17 (2) | 18,80 | 3,6 |
| 18 (3) | 8,50 | 5,0 |
| 19 (4) | 0 | 9,9 |

Les résultats des essais 16 à 19 montrent l'incidence du degré d'humidité de l'atmosphère de stockage sur la surface spécifique du carbonate de sodium anhydre. L'exemple 19 montre notamment qu'en utilisant, conformément à l'invention, une atmosphère anhydre (humidité relative nulle) on évite une dégradation de la surface spécifique du carbonate de sodium anhydre.

Exemples 20 à 23

Les quatre exemples dont la description suit concernent des essais de stockage de carbonate de sodium anhydre auquel on a ajouté un additif dessicant. A cet effet on a préparé du carbonate de sodium anhydre de grande surface spécifique, de la manière exposée dans la description des exemples 16 à 19 et on y a ajouté une poudre d'hydroxyde de sodium, à raison de 2,4 parties en poids d'hydroxyde de sodium pour 100 parties en poids de carbonate de sodium anhydre. On a ensuite divisé la poudre de carbonate de sodium anhydre, additionnée de l'hydroxyde de sodium, en quatre échantillons, que l'on a immédiatement enfermés dans quatre enceintes contenant de l'air ambiant. On a mesuré la surface spécifique des échantillons de carbonate de sodium anhydre à l'issue de quatre périodes de stockage différentes. A chaque prise d'échantillon, l'atmosphère de l'enceinte a été mise en contact avec l'air ambiant. Les résultats des essais sont mentionnés dans le tableau 6.

Tableau 6

| Exemple n° (Echantillon n°) | Durée du stockage (h) | Surface spécifique à l'issue du stockage (m$^2$/g) |
|---|---|---|
| 20 (1) | 0 | 10,3 |
| 21 (2) | 22 | 9,3 |
| 22 (3) | 48 | 9,6 |
| 23 (4) | 95,5 5 | 9,8 |

Exemples 24 à 28

On a répété les essais des exemples 20 à 23 en utilisant du gel de silice à titre d'additif dessicant, à raison de 3,4 parties en poids de gel de silice pour 100 parties en poids de carbonate de sodium anhydre. Les résultats des essais sont mentionnés dans le tableau 7.

Tableau 7

| Exemple n° (Echantillon n°) | Durée du stockage (h) | Surface spécifique à l'issue du stockage (m$^2$/g) |
|---|---|---|
| 24 (1) | 0 | 11 |
| 25 (2) | 18 | 10,4 |
| 26 (3) | 46 | 9,8 |
| 27 (4) | 118 | 9,2 |
| 28 (5) | 166 | 8,3 |

Les exemples 20 à 28 montrent que la présence, conformément à l'invention, d'un dessicant dans la poudre de carbonate de sodium anhydre, préserve la surface spécifique de la poudre de carbonate de sodium anhydre.

Exemples 29 à 33

Toutes autres conditions identiques, on a répété les essais des exemples 20 à 23 sans ajouter d'additif. Les résultats des essais sont mentionnés dans le tableau 8.

Tableau 8

| Exemple n° (Echantillon n°) | Durée du stockage (h) | Surface spécifique à l'issue du stockage (m$^2$/g) |
|---|---|---|
| 29 (1) | 0 | 8,7 |
| 30 (2) | 24,5 | 5,1 |
| 31 (3) | 50,5 | 4,7 |
| 32 (4) | 73,5 | 4,3 |
| 33 (5) | 97 | 4,3 |

Les exemples 29 à 33 montrent qu'en l'absence d'un dessicant dans la poudre de carbonate de sodium anhydre, la surface spécifique de la poudre de carbonate de sodium anhydre diminue rapidement.

**Revendications**

1. Procédé pour l'épuration d'un gaz en composés acides, selon lequel on soumet le gaz à un traitement par voie sèche ou semi humide avec un réactif basique comprenant une poudre de carbonate de sodium de surface spécifique supérieure à 5 m$^2$/g, **caractérisé en ce qu'**on met en oeuvre une poudre de carbonate de sodium anhydre qui, pendant sa manutention, est maintenue dans une atmosphère présentant une humidité relative de 0 à 7 % et/ou contient de 2 à 15 parties en poids d'un agent dessicant pour 100 parties en poids de carbonate de sodium anhydre.

2. Procédé selon la revendication 1, **caractérisé en ce que** la poudre de carbonate de sodium anhydre présente une surface spécifique de 5 à 12 m$^2$/g.

3. Procédé selon la revendication 1 ou 2, **caractérisé en ce que**, pendant la manutention, on soumet la poudre de carbonate de sodium anhydre à un balayage avec ladite atmosphère.

4. Procédé selon la revendication 3, **caractérisé en ce que** l'atmosphère présente une humidité relative de 0 à 5 % et une température de 10 à 25 °C.

5. Procédé selon la revendication 4, **caractérisé en ce que** l'atmosphère est de l'air sec.

6. Procédé selon l'une quelconque des revendications 1 à 5, **caractérisé en ce que** l'agent dessicant comprend un gel de silice ou de l'hydroxyde de sodium.

7. Procédé selon l'une quelconque des revendications 1 à 6, **caractérisé en ce que**, pour obtenir la poudre de carbonate de sodium anhydre, on a soumis une poudre de bicarbonate de sodium à un chauffage dans une atmosphère présentant une humidité relative inférieure à 20 %, pour décomposer plus de 95 % du poids de bicarbonate de sodium en carbonate de sodium.

8. Procédé selon l'une quelconque des revendications 1 à 7, **caractérisé en ce que** l'atmosphère dans laquelle la poudre de bicarbonate de sodium est chauffée présente une humidité relative inférieure ou égale à 5 % et une température de 60 à 150°C.

9. Procédé selon la revendication 8, caractérisé en que, l'humidité relative est inférieure à 2 %.

**Patentansprüche**

1. Verfahren zur Reinigung eines Gases von sauren Verbindungen, worin das Gas einer trockenen oder halbnassen Behandlung mit einem basischen Reaktionsmittel, das ein Natriumcarbonatpulver mit einer spezifischen Oberfläche von über 5 m$^2$/g umfaßt, unterzogen wird, **dadurch gekennzeichnet, daß** man ein wasserfreies Natriumcarbonatpulver einsetzt, das während seiner Handhabung in einer Atmosphäre, die eine relative Feuchtigkeit von 0 bis 7% aufweist, gehalten wird und/oder das 2 bis 15 Gewichtsteile eines Tröcknungsmittels auf 100 Gewichtsteile wasserfreies Natriumcarbonat enthält.

2. Verfahren nach Anspruch 1, **dadurch gekennzeichnet, daß** das wasserfreie Natriumcarbonatpulver eine spezifische Oberfläche von 5 bis 12 m$^2$/g aufweist.

3. Verfahren nach Anspruch 1 oder 2, **dadurch gekennzeichnet, daß** man während der Handhabung das wasserfreie Natriumcarbonatpulver einem Spülen mit der genannten Atmosphäre unterwirft.

4. Verfahren nach Anspruch 3, **dadurch gekennzeichnet, daß** die Atmosphäre eine relative Feuchtigkeit von 0 bis 5% und eine Temperatur von 10 bis 25°C aufweist.

5. Verfahren nach Anspruch 4, **dadurch gekennzeichnet, daß** die Atmosphäre trockene Luft ist.

6. Verfahren nach einem der Ansprüche 1 bis 5, **dadurch gekennzeichnet, daß** das Trocknungsmittel ein Silicagel oder Natriumhydroxid umfaßt.

7.  Verfahren nach einem der Ansprüche 1 bis 6, **dadurch gekennzeichnet, daß** man zur Gewinnung des wasserfreien Natriumcarbonatpulvers ein Natriumbicarbonatpulver einem Erhitzen in einer Atmosphäre, die eine relative Feuchtigkeit von weniger als 20% aufweist, unterzogen hat, um über 95 Gew.-% des Natriumbicarbonats zu Natriumcarbonat zu zersetzen.

8.  Verfahren nach einem der Ansprüche 1 bis 7, **dadurch gekennzeichnet, daß** die Atmosphäre, worin das Natriumbicarbonatpulver erhitzt wird, eine relative Feuchtigkeit von weniger als oder gleich 5% und eine Temperatur von 60 bis 150°C aufweist.

9.  Verfahren nach Anspruch 8, **dadurch gekennzeichnet, daß** die relative Feuchtigkeit unter 2% beträgt.


**Claims**

1.  Process for cleaning a gas of acidic compounds, in accordance with which process the gas is subjected to a dry or semi-wet treatment with a basic reagent comprising a sodium carbonate powder with a specific surface area of more than 5 $m^2$/g, the process being **characterized in that** it employs an anhydrous sodium carbonate powder which, during its handling, is maintained within an atmosphere having a relative humidity from 0 to 7% and/or contains from 2 to 15 parts by weight of a desiccant per 100 parts by weight of anhydrous sodium carbonate.

2.  Process according to Claim 1, **characterized in that** the anhydrous sodium carbonate powder has a specific surface area of from 5 to 12 $m^2$/g.

3.  Process according to Claim 1 or 2, **characterized in that** during the handling the anhydrous sodium carbonate powder is subjected to sweeping with the said atmosphere.

4.  Process according to Claim 3, **characterized in that** the atmosphere has a relative humidity of from 0 to 5% and a temperature of from 10 to 25°C.

5.  Process according to Claim 4, **characterized in that** the atmosphere is dry air.

6.  Process according to any one of Claims 1 to 5, **characterized in that** the desiccant comprises a silica gel or sodium hydroxide.

7.  Process according to any one of Claims 1 to 6, **characterized in that**, in order to obtain the anhydrous sodium carbonate powder, a sodium bicarbonate powder has been subjected to heating in an atmosphere having a relative humidity of less. than 20%, in order to decompose more than 95% of the weight of sodium bicarbonate into sodium carbonate.

8.  Process according to Claims 1 to 7, **characterized in that** the atmosphere in which the sodium bicarbonate powder is heated has a relative humidity of less than or equal to 5% and a temperature of 60 to 150°C.

9.  Process according to Claim 8, **characterized in that** the relative humidity is less than 2%.